# EUROPÄISCHE PATENTANMELDUNG

(11) **EP 3 195 992 A1**
(43) Veröffentlichungstag der Anmeldung: **26.07.2017**
(21) Anmeldenummer: 17020022.4
(22) Anmeldetag: 21.01.2017
(51) Int. Cl.: B25J 15/00, B25J 13/08, B25J 19/02, B25J 19/04, B25J 9/16, B25J 3/00

(54) **ANORDNUNG UND VERFAHREN FÜR DIE AUTOMATISIERTE ERFASSUNG UND ENTNAHME VON WERKSTÜCKEN AUS UNGEORDNETER ANSAMMLUNG**

(30) Priorität: 23.01.2016 DE 102016000611
(71) Anmelder: SK-Technologies GmbH, 78733 Aichhalden-Rötenberg (DE)
(72) Erfinder: KRUCK, Stefan Andreas, 78733 Aichhalden (DE)

(57) **Zusammenfassung**

Anordnung für die automatisierte Erfassung und Entnahme von Werkstücken (2) aus ungeordneter Ansammlung, bestehend aus
-wenigstens einem Behälter (1),
-wenigstens einem Auffangbereich (7)
-einer Objekterkennungseinrichtung (6) zum Erfassen von Werkstücken (2)
-und einer Entnahmeanordnung mit wenigstens einem Genaugreifer (5) und wenigstens einem Ungenaugreifer (4), sowie wenigstens einem Entnahmegerät (3)
**dadurch gekennzeichnet**, dass der Ungenaugreifer (4) die Werkstücke (2) aus dem
Behälter (1) unter Verwendung von Sensorik entnimmt und im Auffangbereich (7) ablegt und die Objekterkennungseinrichtung (6) den Werkstückabgriff mit dem Genaugreifer (5) vom Auffangbereich (7) aus steuert. Sowie Verfahren für die Erfassung und Entnahme von Werkstücken mit solch einer Anordnung.

## Beschreibung

Die Erfindung betrifft eine Anordnung zur einfachen Zuführung für die automatisierte Erfassung und Entnahme von Werkstücken aus einer Ansammlung von Werkstücken gemäß dem Oberbegriff des Patentanspruchs 1 und ein Verfahren gemäß dem Patentanspruch 11.

Die Entnahme der Werkstücke erfolgt mit mindestens zwei an mindestens einem Roboter angeordneten Greifern.

Mittels einer Steuerung werden die Daten der Objekterkennungseinrichtung ausgewertet, um diese zur Bahnplanung und zur Ansteuerung des Greifers zu verwenden. Hierzu sind bereits einige Systeme bekannt, welche alle mit ähnlichen Nachteilen behaftet sind, nämlich einer nur schwierig zu realisierenden Greifgenauigkeit in der Werkstückansammlung.

Prinzipiell bestehen zwei Arten, Werkstücke mittels einer Objekterkennung zu erfassen, zu greifen und dem eigentlichen Arbeitsprozess zuzuführen. Dies ist erstens die Vereinzelung von Werkstücken mittels entsprechender Vorrichtung. Zweitens ist der sogenannte "Griff in die Kiste" oder "Bin Picking" zu nennen. Bei dieser zweiten Variante werden die Werkstücke nicht vereinzelt, sondern mittels entsprechender 2D oder 3D Auswertung lageerkannt. Hierbei verbleiben diese in dem zu entleerenden Behälter.

Beide Arten unterscheiden sich in der Hauptsache durch die Zuführung der Werkstücke. Die zweitgenannte Art, das sogenannte "Bin Picking" ist aus verschiedenen Schutzrechten bekannt. So zeigen DE 103 19 253 A1, EP2314425 A2 und DE 10 2012 013 031 A1 verschiedene Verfahren zur Objekterkennung und Erfassung auf.

Nachteilig bei der erstgenannten Art, also der Werkstückvereinzelung, sind die teuren Zuführungen, welche meist aus einem Behälterkipper und verschiedenen Fördereinrichtungen bestehen. Hierbei entstehen durch das auskippen der Werkstücke aus dem Behälter auch oftmals Oberflächenbeschädigungen an den Werkstücken.

Nachteilig bei der zweitgenannten Art ist die nur schwierig zu realisierende Greifgenauigkeit. Die Schwierigkeit resultiert daraus, dass die Objekterkennungseinrichtung mit einer sehr hohen Auflösung erkennen muss, um das Werkstück mit einem "Genaugreifer" greifen zu können. Genaugreifer werden hier und im Folgenden Greifer genannt, die die Werkstückkontur entweder als zumindest partielle Negativform abbilden oder mit geeigneten Geometrieelementen, z.B. Prismen ein möglichst genaues Greifen des Werkstückes ermöglichen. Die Positionserkennung für ein Greifen mit einem solchen Genaugreifer erfordert hohe Rechenleistungen und oftmals hohen Zeitaufwand. Die Werkstücke sind außerdem oftmals derart ungenau gegriffen, dass ein Weitertransport nur mit voriger Zwischenablage in eine Zentriervorrichtung möglich ist.

Weitere Nachteile beim "Griff in die Kiste" sind problematische Behälterformen und erforderliche Robotergrößen. Vorhandene Behälter, aus denen abgegriffen werden muss, weisen oftmals zur Verstärkung der Behälterwände Sicken auf. Diese Sicken bilden für die Objekterkennung Hinterschneidungen.

Die Robotergrößen werden bei vorhandenen Behältern durch die Behältergrößen mitbestimmt, was oftmals zu nachteilig großen Robotern führt.

Aufgabe vorliegender Erfindung ist es, den Nachteil der Greifungenauigkeit beim "Griff in die Kiste" auszumerzen.

Die Aufgabe der Erfindung wird dadurch gelöst, dass eine Zwischenlösung erstellt wird, welche zwischen einer "Bin Picking" Lösung und einer traditionellen Zuführung über entsprechende Vorrichtungen steht. Die Lösung für dieses Problem wird mittels eines Wechselgreifers realisiert, der Wechselgreifer weist wenigstens zwei Greifer auf. Zumindest einer der Greifer stellt einen Genaugreifer dar. Zumindest ein weiterer Greifer stellt einen "Ungenaugreifer" dar. Solch ein Ungenaugreifer ist beispielsweise aus Veröffentlichungen der Fa. Festo (https://www.festo.com/group/de/cms/10217.htm Abruf am 12.01.16) bekannt. Dieser Ungenaugreifer wird hier und im Folgenden FlexShapeGripper genannt. Es sind jedoch auch andere Ungenaugreifer verwendbar, wie Vakuumsaugelemente.

Vorteilhafte Ausgestaltungen und Weiterbildungen der Erfindung sind in den Unteransprüchen angegeben.

Der erfindungemäße Aufbau und das Verfahren besteht aus einem Behälter, einem Auffangbereich einer Objekterkennungseinrichtung zum Erfassen von Werkstücken und einer Entnahmeanordnung. Die Entnahmeanordnung besteht aus einem Entnahmegerät und zwei Greifern. Einer der Greifer ist ein Ungenaugreifer und der andere ist ein Genaugreifer. Beim "Bin Picking" wird die Objekterkennungseinrichtung dazu verwendet, die Werkstücke direkt aus der Ansammlung im Behälter zu entnehmen. Erfindungsgemäß soll die Objekterkennungseinrichtung hierfür jedoch nicht verwendet werden. Die Entnahme aus dem Behälter erfolgt vom Ungenaugreifer mittels Sensorik oder geeigneter geometrischer Auslegung von Ungenaugreifer und Gegengeometrie am Behälter. Somit kann der Ungenaugreifer innerhalb kurzer Zeit Werkstücke erfassen und ungeordnet im Auffangbereich ablegen. Das Entnahmegerät kann ein vorgegebenes Programm, beispielsweise eine ebenenweise Raumabarbeitung, abfahren und somit eine Behälterentleerung gewährleisten. Die Objekterkennungseinrichtung ist genau auf diesen Bereich gerichtet und erkennt die Werkstücke oder das Werkstück (es kann sein, dass nur eines gegriffen wurde) in der Lageorientierung. Somit kann mittels der Entnahmeanordnung von dieser Position abgegriffen werden.

Eine vorteilhafte Ausgestaltung beschreibt eine Anordnung mit einem von der Fa. Festo bekannten FlexShapeGripper als Ungenaugreifer. Mit diesem Ungenaugreifer ist es möglich, ohne Ansaugschwierigkeiten wie diese bei Vakuumsaugern auftreten, Werkstücke ungeordnet zu greifen.

Gemäß einer weiteren Ausgestaltung der Erfindung wird als Ungenaugreifer eine Gabelform, also eine Schaufel mit Ausnehmungen, die sich über die gesamte Flachmaterialdicke erstrecken, verwendet. Hier und im Folgenden wird mit Gabelform eine Geometrische Ausbildung von Ausnehmungen und Stegen bezeichnet, welche sich über die gesamte Dicke eines Flachmaterials erstrecken. Eine Schaufel-/Gabelform beschreibt hier und im Folgenden eine gebogene Gabelform. Diese Schaufel-/Gabelform greift in das geeignet ausgebildete Gegenstück am Behälter. Somit kann der Roboter mit dem Ungenaugreifer eine kleine Anzahl an Werkstücken aus dem Behälter aufnehmen und an anderer Stelle zur Objekterkennung wieder ablegen. Mittels der Gabel-/Schaufelform am Ungenaugreifer und der Gegengabelform am Auffangbereich kann somit beispielsweise vom Roboter von unten nach oben durch einen Behälterbereich gegriffen werden, womit die gefüllte Schaufel an Werkstücken mitgenommen wird.

In einer Weiterbildung der Erfindung wird ein Vakuumsaugelement als Ungenaugreifer verwendet. Solche Vakuumsaugelemente sind in verschiedensten Ausführungen am Markt erhältlich.

Gemäß einer bevorzugten Ausgestaltung der Erfindung wirkt die Sensorik während des Greifens mit dem Ungenaugreifer mittels mechanischer Widerstandsaufnahme. Somit können Kräfte abgefragt werden, die beim Eintauchen in die Werkstückansammlung auftreten.

In einer Vorteilhaften Ausgestaltung der Erfindung ist das Entnahmegerät ein Roboter.

Vorteilhafterweise wird die Sensorik des Roboters, also die mechanische Widerstandsaufnahme am Roboter als Sensorik für das Greifen mit dem Ungenaugreifer verwendet.

In einer weiteren Ausgestaltung der Erfindung wird eine Abstandsmessung als Sensorik für das Greifen mit dem Ungenaugreifer verwendet. Mit einfachen Abstandssensoren kann so zur Werkstückansammlung gefahren werden, um ein zu starkes Auffahren auf die Werkstückansammlung zu vermeiden.

Gemäß einer vorteilhaften Ausgestaltung der Erfindung ist der Auffangbereich als Drehteller ausgebildet. Mittels der Ablage der Werkstücke durch den Ungenaugreifer auf dem Drehteller, können die Werkstücke in eine vorteilhaftere Lage gedreht werden. Dies ist beispielsweise nötig, wenn die Reflexion für die Objekterkennungseinrichtung ein schlechtes Bild ergibt oder das Entnahmegerät eine ungünstige Greifposition hätte.

In einer Weiterbildung der Erfindung ist der Aufbau derart gestaltet, dass die Objekterkennungseinrichtung dann aktiv ist, wenn das Entnahmegerät Werkstücke aus dem Behälter entnimmt. Dies hat den Vorteil, dass die Zeit genutzt werden, kann, um die Position und Lage des Werkstücks zu erkennen und mit der Steuerung zu verrechnen, während das Entnahmegerät am Behälter beschäftigt ist.

Die Erfindung wird anhand der nachfolgenden Figuren ausführlich erläutert. Es zeigen:
- Fig. 1:: eine perspektivische Ansicht mit Roboter und Schaufel mit Ausnehmungen

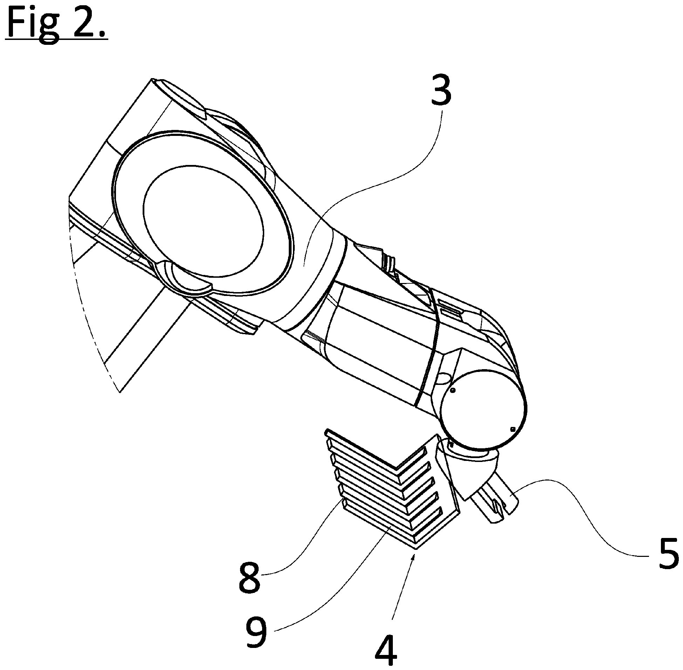

- Fig. 2:: eine perspektivische Ansicht mit Vergrößerung der beiden Greifer am Roboter als Ausbruch.

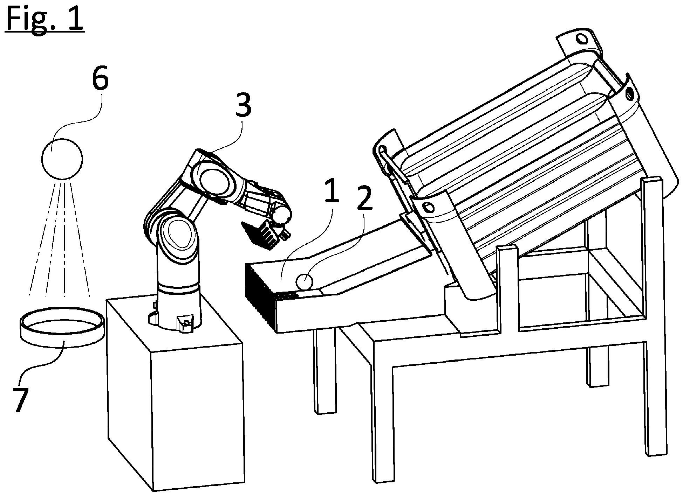

In der perspektivischen Ansicht nach Figur 1 ist ein erfindungsgemäßer Aufbau mit einem Roboter (3) als Entnahmegerät, einer über dem Roboter (3) angeordneten Objekterkennungseinrichtung (6) einem Auffangbereich (7) und einem Behälter (1) gezeigt. Am Roboter (3) sind zwei Greifer angeordnet. Der Greifer (4) ist ein Ungenaugreifer. Der Greifer (5) ist ein Genaugreifer. Der Ungenaugreifer (4) weist eine Gabelform auf, also eine Schaufel mit Ausnehmungen (8), die sich über die gesamte Flachmaterialdicke erstrecken. Diese Schaufel-/Gabelform greift versetzt in das geeignet ausgebildete Gegenstück am Behälter. Jeweils der Steg (9) und die Ausnehmung (8) von Ungenaugreifer (4) und Behälter (1) greifen ineinander. Somit kann der Roboter mit dem Ungenaugreifer (4) eine kleine Anzahl an Werkstücken (2) aus dem Behälter (1) aufnehmen und an anderer Stelle zur Objekterkennung wieder ablegen. Bei diesem Abriff wirkt die Sensorik des Roboters (3) derart, dass bei einem nicht richtigen Abgriff ein entsprechendes Signal ausgegeben wird. So kann dieses Signal beispielsweise dazu dienen, bei einem Crash zwischen einem Steg (9) und einer Ausnehmung (8) ein Signal für den Roboterstopp auszugeben. Mittels der Gabel-/Schaufelform am Ungenaugreifer (4) und der Gegenrechenform am Auffangbereich kann somit beispielsweise vom Roboter (3) von unten nach oben durch einen Behälterbereich gegriffen werden, womit der gefüllte Ungenaugreifer (4) mit Werkstücken mitgenommen wird.

Diese ungeordnet gegriffenen Werkstücke werden dann im Auffangbereich (7) abgelegt. Von dort erkennt die Objekterkennungseinrichtung (6) die Lage und Position des Werkstücks oder der Werkstücke und erlaubt einen lagegerechten Abgriff mittels des Genaugreifers (4). Mittels Kommunikation von der Obejkterkennungseinrichtung (6) zur Robotersteuerung erfolgt die Bahnplanung für diese lagegerechten Werkstückabgriff. Nun wird das gegriffene Werkstück dem eigentlichen Produktionsprozess zugeführt.

### Bezugszeichenliste:

- 1: Behälter
- 2: Werkstück
- 3: Entnahmegerät (Roboter)
- 4: Ungenaugreifer
- 5: Genaugreifer
- 6: Objekterkennungseinrichtung
- 7: Auffangbereich
- 8: Ausnehmung
- 9: Steg

## Patentansprüche

1. Anordnung für die automatisierte Erfassung und Entnahme von Werkstücken (2) aus ungeordneter Ansammlung, bestehend aus
- wenigstens einem Behälter (1),
- wenigstens einem Auffangbereich (7)
- einer Objekterkennungseinrichtung (6) zum Erfassen von Werkstücken (2), mit Kommunikationsmitteln zur Steuerung eines Entnahmegeräts (3)
- und einer Entnahmeanordnung mit wenigstens einem Genaugreifer (5) und wenigstens einem Ungenaugreifer (4), sowie wenigstens einem Entnahmegerät (3) **dadurch gekennzeichnet, dass** die Werkstücke (2) vom Entnahmegerät (3) mit dem Ungenaugreifer (4) unter Verwendung von Sensorik aus dem Behälter (1) entnehmbar und im Auffangbereich (7) ablegbar sind und die lagegerechte Bahnplanung für den Werkstückabgriff vom Auffangbereich (7) aus durch die Objekterkennungseinrichtung (6) steuerbar ist.

2. Anordnung nach Anspruch 1, **dadurch gekennzeichnet, dass** der Ungenaugreifer (4) ein FlexShapeGripper ist.

3. Anordnung nach Anspruch 1, **dadurch gekennzeichnet, dass** der Ungenaugreifer (4) eine Schaufel ist, mit Ausnehmungen (8), die sich über die gesamte Schaufeldicke erstrecken und der Behälter (1) geeinget ausgebildete Gegenausnehmungen aufweist.

4. Anordnung nach einem der vorhergehenden Ansprüche, **dadurch gekennzeichnet, dass** der Ungenaugreifer (4) ein Vakuumsaugelement ist.

5. Anordnung nach einem der vorhergehenden Ansprüche, **dadurch gekennzeichnet, dass** die Sensorik zur Werkstückentnahme durch den Ungenaugreifer (4) mittels mechanischer Widerstandsaufnahme wirkt.

6. Anordnung nach einem der vorhergehenden Ansprüche, **dadurch gekennzeichnet, dass** das Entnahmegerät (3) ein Roboter ist.

7. Anordnung nach den Ansprüchen 4 und 5, **dadurch gekennzeichnet, dass** die Sensorik eines Roboters (3) als Sensorik für die Werkstückaufnahme durch den Ungenaugreifer (4) verwendet wird.

8. Anordnung nach einem der vorhergehenden Ansprüche, **dadurch gekennzeichnet, dass** die Sensorik mittels Abstandsmessung wirkt.

9. Anordnung nach einem der vorhergehenden Ansprüche, **dadurch gekennzeichnet, dass** der Auffangbereich (7) ein Drehteller ist.

10. Anordnung nach einem der vorhergehenden Ansprüche, **dadurch gekennzeichnet, dass** die Objekterkennungseinrichtung (6) aktiv ist, währen das Entnahmegerät (3) Werkstücke (2) aus dem Behälter (1) entnimmt.

11. Verfahren zur Zuführung für die automatisierte Erfassung und Entnahme von Werkstücken (2), bestehend aus
- wenigstens einem Behälter (1),
- wenigstens einem Auffangbereich (7)
- einer Objekterkennungseinrichtung (6) zum Erfassen von Werkstücken (2) mit Kommunikationsmitteln zur Steuerung eines Entnahmegeräts (3)
- und einer Entnahmeanordnung mit wenigstens einem Genaugreifer (5) und wenigstens einem Ungenaugreifer (4), sowie wenigstens einem Entnahmegerät (3), **dadurch gekennzeichnet, dass** der Ungenaugreifer (4) die Werkstücke (2) aus dem Behälter (1) unter Verwendung von Sensorik entnimmt und im Auffangbereich (7) ablegt und die Objekterkennungseinrichtung (6) den lagegerechten Werkstückabgriff mit dem Genaugreifer (5) vom Auffangbereich (7) aus steuert.
